# EUROPÄISCHE PATENTSCHRIFT

(11) **EP 2 852 044 B1**
(45) Veröffentlichungstag und Bekanntmachung des Hinweises auf die Patenterteilung: **06.03.2019**
(21) Anmeldenummer: 14184893.7
(22) Anmeldetag: 16.09.2014
(51) Int. Cl.: H02M 7/538, H02M 3/158, H02M 1/42, H02M 7/797

(54) **BIDIREKTIONALER WANDLER MIT VORZUGSRICHTUNG UND BLINDLEISTUNGSFÄHIGE WECHSELRICHTER MIT DIESEM WANDLER**
BIDIRECTIONAL CONVERTER WITH PREFERRED DIRECTION AND INVERTER WITH REACTIVE POWER CAPABILITY
CONVERTISSEUR BIDIRECTIONNEL À DIRECTION PRÉFÉRENTIELLE ET ONDULEUR CAPABLE DE PRODUIRE DE LA PUISSANCE REACTIVE

(30) Priorität: 23.09.2013 DE 102013110507
(43) Veröffentlichungstag der Anmeldung: 25.03.2015
(73) Patentinhaber: SMA Solar Technology AG, 34266 Niestetal (DE)
(72) Erfinder: Müller, Burkard, 34123 Kassel (DE); Friebe, Jens, 34246 Vellmar (DE); Leifert, Torsten, 34121 Kassel (DE)

(56) Entgegenhaltungen:
- EP-A1- 1 603 224
- EP-A2- 2 221 972
- EP-A2- 2 515 424
- WO-A1-91/03104
- WO-A1-2010/006695
- CH-B1- 700 030
- JP-A- 2008 079 352
- US-A1- 2011 273 159

## Beschreibung

### TECHNISCHES GEBIET DER ERFINDUNG

Die Erfindung bezieht sich auf einen bidirektionalen Wandler mit den Merkmalen des Oberbegriffs des unabhängigen Patentanspruchs 1. Ein solcher Wandler kann als bidirektionaler DC/DC-Wandler zum Beispiel zwischen zwei Gleichspannungszwischenkreisen Verwendung finden.

Die Erfindung bezieht sich auch auf blindleistungsfähige Wechselrichter, die mindestens einen bidirektionalen Wandler als sinusförmige Halbwellen formenden Teil aufweisen. Solche Wechselrichter sind aufgrund der bidirektionalen Ausbildung des Wandlers in der Lage, nicht nur Wirkleistung, sondern auch Blindleistung bereitzustellen.

### STAND DER TECHNIK

Es ist grundsätzlich bekannt, dass ein Hochsetzsteller und ein Tiefsetzsteller zwischen zwei Gleichspannungszwischenkreisen zu einer Halbbrücke kombiniert werden können, die zwischen die Pole des Gleichspannungszwischenkreises für eine höhere Zwischenkreisspannung geschaltet ist und deren Mittelpunkt über eine Drossel an einen Pol des Gleichspannungszwischenkreises für die niedrigere Zwischenkreisspannung angeschlossen ist. Bei einer solchen Halbbrücke ist dem Hochsetzstellerschalter die Tiefsetzstellerfreilaufdiode und dem Tiefsetzstellerschalter die Hochsetzstellerfreilaufdiode parallel geschaltet. Um die Induktivität und damit die Baugröße der an den Mittelpunkt der Halbbrücke angeschlossene Drossel klein halten zu können, muss der Schalter im jeweiligen Hochsetzsteller- oder Tiefsetzstellerbetrieb der Halbbrücke mit hoher Frequenz getaktet werden (typischerweise einige zehn kHz). Um dies mit geringen Schaltverlusten zu realisieren, sind MOSFET-Halbleiterschalter bevorzugt, die beim Takten mit hoher Frequenz vergleichsweise geringe Schaltverluste verursachen. MOSFET-Halbleiterschalter weisen jedoch parasitäre, interne Dioden auf, die als Bodydioden bezeichnet werden. Diese sind den Freilaufdioden der Halbleiterbrücke parallel geschaltet und können daher grundsätzlich unter denselben Randbedingungen leitend werden wie die Freilaufdioden. Sie sind aber nicht für schnelles Schalten geeignet und würden beim schnellen Schalten hohe Schaltverluste, schlechtes EMV-Verhalten und u. U. sogar eine Zerstörung der Schaltung hervorrufen.

Aus der US 6,847,196 B2 ist ein blindleistungsfähiger Wechselrichter mit zwei parallel zwischen einen ersten Anschluss und einen zweiten Anschluss geschalteten Halbbrücken bekannt. Jede Halbbrücke weist zwei parallele Leitungspfade auf, in denen jeweils ein MOSFET als Schaltelement mit einer Freilaufdiode in Reihe geschaltet ist. Dabei sind je ein Schaltelemente und je eine Freilaufdiode in den beiden Leitungspfaden mit dem ersten und mit dem zweiten Anschlusses verbunden. Die Mittelpunkte der beiden Leitungspfade sind über zwei kleine Drosseln miteinander verbunden. Der Verbindungspunkt dieser beiden Drosseln ist über eine weitere Drossel mit einem Wechselstromanschluss verbunden. Der andere Wechselstromanschluss ist an einen entsprechenden Verbindungspunkt der anderen Halbbrücke angeschlossen. Durch abwechselnden Betrieb der beiden Halbbrücken als Tiefsetzsteller werden aufeinander folgende Halbwellen eines Wechselstroms geformt, der an den Wechselstromanschlüssen ausgegeben wird. Die jeweils nicht stromformende Halbbrücke wird durchgeschaltet. Der alternativ mögliche Hochsetztellerbetrieb der Halbbrücken ermöglicht es, den Energiefluss umzukehren und damit z. B. auch Blindleistung an dem Wechselstromanschlüssen auszugeben. Im Betrieb des bekannten Wechselrichters wird ein Kommutieren des Stroms von dem jeweils getakteten MOSFET auf die Bodydiode des MOSFET in dem anderen Leitungszweigs derselben Halbbrücke durch die induktive Spannungsteilung der Drosseln verhindert, so dass der Strom ausschließlich auf die in demselben Leitungspfad mit dem getakteten MOSFET in Reihe geschaltete Freilaufdiode kommutiert. Der bekannte Wechselrichter ist durch insgesamt drei Drosseln pro Halbbrücke vergleichsweise aufwändig. Er weist auch insgesamt vier vergleichsweise kostspielige MOSFET auf.

Aus der US 2011/0013438 A1 ist ein blindleistungsfähiger Wechselrichter bekannt, bei dem sowohl MOSFET-Halbleiterschalter als auch IGBT-Halbleiterschalter Verwendung finden. Der bekannte Wechselrichter ist vom NPC (Neutral Point Clamped)-Schaltungstyp mit Freilaufdioden zur Ausgabe von Blindleistung. Die US 2011/0013438 A1 beschreibt auch Schaltungen mit Halbbrücken, bei denen mit MOSFET-Halbleiterschaltern bestückte Leitungspfade durch Drosseln entkoppelt sind. Bei den Wechselrichtern mit NPC-Schaltung, die nicht mehr als zwei MOSFET- und zwei IGBT-Halbleiterschalter aufweisen, sind jedoch keine, irgendwelche Leitungspfade entkoppelnden Drosseln vorgesehen.

Aus der EP 2 421 135 A2 ist die Kombination einer Tiefsetzstellerschaltung und eines Polwenders zur Ausbildung eines Photovoltaikwechselrichters bekannt. Die Tiefsetzstellerschaltung formt einen eingehenden Gleichstrom in Halbwellen, die mit der Polwenderschaltung in einen Wechselstrom umgesetzt werden. Die Tiefsetzstellerschaltung weist zwei bis auf die Durchlassrichtungen ihrer Dioden und die Sperrrichtungen ihrer Schalter spiegelsymmetrisch zu einem Mittelpunkt ausgebildete und angeordnete Teiltiefsetzsteller auf. Auch wenn die Tiefsetzstellerschaltung eine Phasenverschiebung des Stroms zur Spannung in jeder Halbwelle ermöglicht, ist sie nicht uneingeschränkt blindleistungsfähig. Sie ermöglicht keine unterschiedlichen Vorzeichen von Strom und Spannung am Wechselstromausgang des Photovoltaikwechselrichters und ist daher nur zu einer Blindleistungsausgabe mit hohem Klirrfaktor in der Lage.

Aus der US 5,107,151 A ist ein Schaltkreis bekannt, bei dem zwei Eingänge über eine Halbbrücke mit einem Ausgang verbunden sind. Die Halbbrücke weist zwei Leitungspfade zwischen den beiden Eingängen auf, in denen jeweils ein Schaltelement mit einer Freilaufdiode in Reihe geschaltet ist. Dabei ist das Schaltelement in dem einen Leitungspfad mit dem einen Eingang und das Schaltelement in dem anderen Leitungspfad mit dem anderen Eingang verbunden. Bei den Freilaufdioden verhält es sich umgekehrt. Mittelpunkte der Leitungspfade sind durch eine Drossel miteinander verbunden. Der Mittelpunkt des zweiten Leitungspfads ist über eine weitere Drossel mit einem Ausgang der Schaltung verbunden. Zwei solcher Schaltungen können zu einer Vollbrücke zusammengefasst sein, um einen Elektromotor anzusteuern, wobei nur eine weitere Drossel neben den Drosseln zwischen den Mittelpunkten der Leitungspfade beider Brücke vorgesehen ist. Im Betrieb der bekannten Schaltung wird bei jeder Halbbrücke nur eines der Schaltelemente, das zur Pulsweitenmodulation dient, mit hoher Frequenz getaktet, während das andere Schaltelement, das zur Kommunation dient, mit niedriger Frequenz getaktet wird. Bei dieser unterschiedlichen Taktung der Schaltelemente wird das mit niedriger Frequenz getaktete Schaltelement, anders als das mit hoher Frequenz getaktete Schaltelement, bei dem es sich um einen MOSFET handelt, als IGBT ausgebildet. Die US 5,107,151 A beschreibt keine bidirektionalen Wandler oder bidirektionalen Wechselrichter mit unterschiedlich ausgebildeten Schaltelementen in den Halbbrücken.

Aus der EP 2 221 972 A2 ist ein Wandler bekannt, der einen ersten Leitungspfad mit einem ersten Schaltelement und einer ersten Diode, einen zweiten Leitungspfad mit einem zweiten Schaltelement und einer zweiten Diode und eine Drossel umfasst. Die Drossel ist so angeschlossen, dass ein Strom, der durch einen Kurzschluss des Wandlers beim Schließen beider Schaltelemente fließt, durch die Diode fließt. Eine an den Wandler angeschlossene Last kann ein Motor sein.

Aus der WO 2010/006695 A1 ist ein Wandler mit einer Halbbrücke aus zwei parallel geschalteten Reihenschaltungen bekannt, die jeweils einen ersten und einen zweiten in Reihe geschalteten Schaltungsteil aufweisen, wobei eine Drossel die Mittelpunkte der beiden Reihenschaltungen verbindet. Der erste Schaltungsteil der ersten Reihenschaltung weist einen Halbleiterschalter samt seriell zugeschalteter Diode und der zweite Schaltungsteil der ersten Reihenschaltung eine Freilaufdiode auf. Ein erster Schaltungsteil der zweiten Reihenschaltung weist entsprechend eine Freilaufdiode und der zweite Schaltungsteil der zweiten Reihenschaltung einen Halbleiterschalter samt seriell zugeschalteter Diode auf.

Aus der WO 91/03104 A1 ist ein Wandler mit zwei in Reihe geschalteten Schaltelementen bekannt, zwischen denen entweder ein Paar von in Reihe geschalteten Drosseln oder eine Drossel in Reihe geschaltet ist. Eines oder beide der Schaltelemente werden ein- und ausgeschaltet, um eine Last mit einer Ausgangsspannung zu versorgen. Die Schaltung umfasst weiterhin Dioden, um Rückströme zu vermeiden, und um einen Bypass um das erste und das zweite Schaltelement bereitzustellen. Das erste und das zweite Schaltelement können Halbleiterschaltelemente wie FETs und insbesondere MOSFETs sein. Das erste Schaltelement kann auch ein IGBT sein, wenn nur das zweite Schaltelement hochfrequent getaktet wird.

Die CH 700 030 B1 offenbart eine Schaltungsanordnung mit Wechselrichter- und Gleichstromstellerfunktion zur Kopplung einer Gleichspannungsquelle mit einer Wechselspannungsseite, wobei die Schaltungsanordnung einen bidirektionalen Gleichstromsteller, der eingangsseitig an die Gleichspannungsseite und ausgangsseitig an einen Zwischenkreis angeschlossen ist, und eine Umrichterschaltung aufweist, die eingangsseitig an den Zwischenkreis und ausgangsseitig an die Wechselspannungsseite angeschlossen ist. Der Gleichstromsteller beinhaltet eine getaktete Tiefsetzstellerschaltung und eine getaktete Hochsetzstellerschaltung, die ein- und ausgangsseitig an die Gleichspannungsseite bzw. den Zwischenkreis angeschlossen sind, so dass ein bidirektionaler Energiefluss zwischen der Gleichspannungsseite und dem Zwischenkreis ermöglicht wird.

Aus der EP 2 515 424 A2 ist ein Gleichspannungswandler zum Hoch- und/oder Tiefsetzen von Spannungen bekannt, der ein erstes, ein zweites und ein drittes Paar von Anschlüssen aufweist, wobei ein Energiefluss zwischen dem ersten und dem zweiten Paar von Anschlüssen einerseits und dem dritten Paar von Anschlüssen andererseits möglich ist. Der Gleichspannungswandler umfasst eine erste Halbbrücke, welche parallel zu dem ersten Paar von Anschlüssen geschaltet ist und eine Reihenschaltung von wenigstens einer ersten Schaltvorrichtung und einer zweiten Schaltvorrichtung aufweist, und eine zweite Halbbrücke, welche parallel zum dem zweiten Paar von Anschlüssen geschaltet ist und eine Reihenschaltung von wenigstens einer dritten Schaltvorrichtung und wenigstens einer vierten Schaltvorrichtung aufweist. Ein Mittelpunkt der ersten Halbbrücke ist über eine Drossel mit einem Mittelpunkt der zweiten Halbbrücke verbunden.

Aus der JP 2008 079352 A ist ein Gleichspannungswandler mit drei parallelen Leitungspfaden bekannt, wobei in zwei der Leitungspfade zwei Schaltelemente mit Bodydioden und in dem dritten Leitungspfad zwei Dioden in Reihe geschaltet sind. Jedem der Schaltelemente in dem zweiten Leitungspfad ist zudem eine Kapazität parallelgeschaltet. Der erste und der zweite Leitungspfad sind über eine Drossel miteinander verbunden. Der erste und der dritte Leitungspfad sind über einen bidirektionalen Schalter aus zwei Schaltelementen mit einander entgegen gerichteten Bodydioden miteinander verbunden. Die Mittelpunkte des zweiten und des dritten Leitungspfads sind über eine Kapazität miteinander verbunden. Zwischen dem Mittelpunkt des dritten Leitungspfads und einem der Anschlüsse des Wandlers ist eine weitere Drossel angeordnet.

Aus der US 2011/273159 A1 ist ein Leistungswandler mit zwei parallelen Leitungspfaden bekannt, deren Mittelpunkte durch eine Drossel miteinander verbunden sind. Dabei können in dem einen Leitungspfad zwei Schaltelemente in Reihe geschaltet sein, während in dem anderem Leitungspfad zwei Dioden in Reihe geschaltet sind. In einer anderen Ausführungsform ist in jedem der Leitungspfade eine Reihenschaltung aus einem Schaltelement und einer Freilaufdiode mit einer weiteren Diode in Reihe geschaltet, die ihrerseits mit einer Parallelschaltung aus einer Kapazität mit einem Widerstand in Reihe geschaltet ist.

Aus der EP 1 603 224 A1 ist ein Wandler mit einer Halbbrücke aus zwei in Reihe geschalteten Schaltelementen mit Bodydioden bekannt, wobei der Mittelpunkt der Halbbrücke über eine Drossel an einen der Anschlüsse des Wandlers angeschlossen ist.

### AUFGABE DER ERFINDUNG

Der Erfindung liegt die Aufgabe zugrunde, einen bidirektionalen Wandler mit den Merkmalen des Oberbegriffs des unabhängigen Patentanspruchs 1 und darauf basierende blindleistungsfähige Wechselrichter aufzuzeigen, die einen einfachen und kostengünstigen Aufbau bei dennoch hohem praktischem Wirkungsgrad aufweisen.

### LÖSUNG

Die Aufgabe der Erfindung wird durch einen bidirektionalen Wandler mit den Merkmalen des unabhängigen Patentanspruchs 1 gelöst. Die abhängigen Patentansprüche 2 bis 7 betreffen bevorzugte Ausführungsformen des erfindungsgemäßen bidirektionalen Wandlers. Die Patentansprüche 8 bis 13 sind auf blindleistungsfähige Wechselrichter mit mindestens einem erfindungsgemäßen Wandler gerichtet.

### BESCHREIBUNG DER ERFINDUNG

Ein erfindungsgemäßer bidirektionaler Wandler weist einen ersten Anschluss, einen zweiten Anschluss, einen dritten Anschluss und einen vierten Anschluss auf, wobei der erste und der zweite Anschluss ein Paar von hochspannungsseitigen Anschlüssen ausbildet, zwischen denen im Betrieb des Wandlers eine erste Spannung anliegt, und wobei der dritte und der vierte Anschluss ein Paar von niederspannungsseitigen Anschlüssen ausbildet, zwischen denen im Betrieb des Wandlers eine zweite Spannung anliegt, wobei die erste Spannung mindestens so groß ist wie die zweite Spannung. Weiter weist ein erfindungsgemäßer bidirektionaler Wandler eine Halbbrücke auf, die zwei Schaltelemente und zwei Freilaufdioden umfasst, wobei die Halbbrücke in einen ersten Leitungspfad und einen zweiten Leitungspfad aufgeteilt ist, die parallel zwischen den ersten Anschluss und den zweiten Anschluss geschaltet sind, in denen jeweils eines der Schaltelemente und eine der Freilaufdioden in Reihe geschaltet sind und deren Mittelpunkte über eine kleinere Drossel miteinander verbunden sind. Die beiden Schaltelemente und die beiden Freilaufdioden sind in diagonaler Anordnung auf die beiden Leitungspfade verteilt; das heißt, die beiden Schaltelemente und die beiden Freilaufdioden in den beiden Leitungspfaden sind jeweils mit unterschiedlichen Anschlüssen des Paars von hochspannungsseitigen Anschlüssen verbunden. Mit anderen Worten ist dann, wenn das eine Schaltelement mit dem ersten Anschluss direkt verbunden ist, das andere Schaltelement mit dem zweiten Anschluss direkt verbunden, und bei den Freilaufdioden verhält es sich genau umgekehrt..

Die Halbbrücke weist einen ersten Betriebsmodus auf, in dem das Schaltelement in dem ersten Leitungspfad mit hoher Frequenz getaktet wird, um einen Energiefluss in einer ersten Richtung zwischen dem Paar von hochspannungsseitigen Anschlüssen und dem Paar von niederspannungsseitigen Anschlüssen hervorzurufen, und sie weist einen zweiten Betriebsmodus auf, in dem sie das Schaltelement in dem zweiten Leitungspfad mit hoher Frequenz ansteuert, um einen Energiefluss in einer der ersten Richtung entgegengesetzten zweiten Richtung zwischen dem Paar von hochspannungsseitigen Anschlüssen und dem Paar von niederspannungsseitigen Anschlüssen hervorzurufen. Das heißt, der Wandler wirkt in der einen Richtung zwischen dem Paar von hochspannungsseitigen Anschlüssen und dem Paar von niederspannungsseitigen Anschlüssen als Tiefsetzsteller und in der entgegengesetzten Richtung als Hochsetzsteller. Das hochfrequente Takten des jeweiligen Schaltelements erfolgt typischerweise mit einer Frequenz von einigen hundert bis mehreren 10 kHz, beispielsweise mit 16 kHz, wobei ein über den bidirektionalen Wandler in der jeweiligen Richtung zwischen dem Paar von hochspannungsseitigen Anschlüssen und dem Paar von niederspannungsseitigen Anschlüssen fließende Strom durch Pulsweitenmodulation geformt werden kann.

Der erfindungsgemäße bidirektionale Wandler weist darüber hinaus eine größere Drossel auf, die zwischen den Mittelpunkt des zweiten Leitungspfads und den dritten Anschluss geschaltet ist. Unter dem Mittelpunkt eines Leitungspfads wird hierbei die Verbindung zwischen dem Schaltelement und der Freilaufdiode innerhalb dieses Leitungspfads verstanden. Die Mittelpunkte beider Leitungspfade sind über eine kleinere Drossel miteinander verbunden. So sind zwischen den Mittelpunkt des ersten Leitungspfads und den dritten Anschluss die kleinere Drossel und die größere Drossel in Reihe geschaltet, während zwischen den Mittelpunkt des zweiten Leitungspfads und den dritten Anschluss nur die größere Drossel geschaltet ist.

Die beiden Schaltelemente der Halbbrücke sind von unterschiedlichem Typ. Dabei verursacht das Schaltelement in dem ersten Leitungspfad höhere Schaltverluste als das Schaltelement in dem zweiten Leitungspfad. Das Schaltelement in dem zweiten Leitungspfad weist hingegen eine Bodydiode auf. Dass diese Bodydiode als Freilaufdiode wirkt, auf die der Strom beim Öffnen des getakteten Schaltelements in dem ersten Leitungspfad kommutiert ist unerwünscht, weil dies zu EMV-Problemen, hohen Schaltverlusten und möglicherweise sogar zur Zerstörung des Schaltelements in dem zweiten Leitungspfad führen würde. Damit der Strom stattdessen auf die in diesem ersten Leitungspfad angeordnete Freilaufdiode kommutiert, ist eine kleinere Drossel zwischen den Mittelpunkten der Leitungspfade angeordnet. Sie wirkt zusammen mit der größeren Drossel als induktiver Spannungsteiler, so dass an der Freilaufdiode in dem ersten Leitungspfad beim Schließen des Schaltelements in dem ersten Leitungspfad eine höhere Spannung ansteht als an der Bodydiode des Schaltelements in dem zweiten Leitungspfad. Diese Schutzfunktion weist die kleinere Drossel jedoch nicht für das Schaltelement in dem ersten Leitungspfad auf, wenn das getaktete Schaltelement in dem zweiten Leitungspfad geöffnet wird. Bei geschlossenem Schaltelement in dem zweiten Leitungspfad und geöffnetem Schaltelement in dem ersten Leitungspfad fließt kein Strom über die kleinere Drossel, und entsprechend fällt beim anschließenden Unterbrechen des Stromflusses durch Öffnen des Schalters in dem zweiten Leitungspfad keine Spannung über der kleinen Drossel ab. Bei dem erfindungsgemäßen bidirektionalen Wandler ist das Schaltelement in dem ersten Leitungspfad jedoch keines mit einer Bodydiode, auf die ein Kommutieren des Stroms zu verhindern ist. Bei dem erfindungsgemäßen bidirektionalen Wandler ist die zweite Richtung zwischen dem Paar von hochspannungsseitigen Anschlüssen und dem Paar von niederspannungsseitigen Anschlüssen, in der der Energiefluss durch hochfrequentes Takten des Schaltelements in dem zweiten Leitungspfad mit den niedrigeren Schaltverlusten hervorgerufen wird, eine bevorzugte Richtung des Energieflusses zwischen dem Paar von hochspannungsseitigen Anschlüssen und dem Paar von niederspannungsseitigen Anschlüssen.

Konkret ist bei dem erfindungsgemäßen bidirektionalen Wandler das Schaltelement in dem ersten Leitungspfad vorzugsweise ein IGBT, während das Schaltelement in dem zweiten Leitungspfad vorzugsweise ein FET(Feldeffekttransistor) ist, dies kann beispielsweise ein JFET und insbesondere ein MOSFET sein. Dabei ist der FET so an den ersten Anschluss oder den zweiten Anschluss angeschlossen, dass bei seinem getakteten Betrieb Leistung in einer bevorzugten Richtung zwischen dem einen und dem anderen Paar von Anschlüssen des Wandlers fließt. Hingegen wird der IGBT in dem ersten Leitungspfad getaktet, um Leistung in der weniger bevorzugten Richtung zwischen den beiden Paaren von Anschlüssen fließen zu lassen. Wenn die bevorzugte Richtung des Leistungsflusses von dem dritten und vierten Anschluss zu dem ersten und zweiten Anschluss, d. h. von dem Paar von niederspannungsseitigen Anschlüssen zu dem Paar von hochspannungsseitigen Anschlüssen verläuft, d. h. der erfindungsgemäße Wandler als Hochsetzsteller arbeitet, ist das Schaltelement in dem zweiten Leitungspfad an den zweiten Anschluss angeschlossen, der mit dem vierten Anschluss verbunden ist. Der zweite und der vierte Anschluss sind ebenso wie der erste und der dritte Anschluss in Bezug auf die anliegenden Spannungen gleichnamig, d. h. von derselben Polarität.

Wenn die bevorzugte Richtung des Energieflusses jedoch von dem ersten und zweiten Anschluss, d. h. von dem Paar von hochspannungsseitigen Anschlüssen zu dem Paar von niederspannungsseitigen Anschlüssen, verläuft, wobei der erfindungsgemäße Wandler als Tiefsetzsteller arbeitet, ist das Schaltelement in dem zweiten Leitungspfad zwischen den Mittelpunkt des zweiten Leitungspfads und den ersten Anschluss geschaltet, der nicht direkt mit dem dritten Anschluss verbunden ist.

Unabhängig von der bevorzugten Richtung des Leistungsflusses bzw. der bevorzugten Funktion des erfindungsgemäßen bidirektionalen Wandlers als Hochsetzsteller oder Tiefsetzsteller wird das Schaltelement in dem zweiten Leitungspfad in dem zweiten Betriebsmodus der Halbbrücke getaktet, um den bevorzugten Leistungsfluss zu realisieren. Umgekehrt wird für den Leistungsfluss in der weniger bevorzugten Richtung immer das Schaltelement in dem ersten Leitungspfad in dem ersten Betriebsmodus der Halbbrücke getaktet. Dieses Schaltelement, das keine Bodydiode aufweist und das insbesondere als IGBT ausgebildet ist, verursacht zwar bei gleich hohem Stromfluss höhere Schaltverluste als das Schaltelement in dem zweiten Leitungspfad. In der weniger bevorzugten Richtung des Leistungsflusses treten aber nur geringere Ströme auf und sind seltener, so dass der schlechtere Wirkungsgrad des IGBT kaum ins Gewicht fällt. Verglichen mit einer Halbbrücke mit zwei Leitungspfaden, die je mit einem MOSFET bestückt und durch zwei kleine Drosseln zwischen ihren Mittelpunkten entkoppelt sind, werden die höheren Schaltverluste durch den einfacheren Aufbau des Schaltelements in dem ersten Leitungspfad und nur eine kleine Drossel zwischen den Mittelpunkten beider Leitungspfade und damit insgesamt nur eine kleinere und eine größere Drossel für die gesamte Halbbrücke des erfindungsgemäßen Wandlers mehr als ausgeglichen. Hingegen ist der Wirkungsgrad des erfindungsgemäßen Wandlers in der bevorzugten Richtung der Leistungsübertragung besonders hoch, ohne dass Risiken für die Bodydiode des Schaltelements in dem zweiten Leitungspfad beim Takten des Schaltelements in dem ersten Leitungspfad bestehen.

Im bevorzugten Betrieb des erfindungsgemäßen Wandlers wird allein die größere Drossel bestromt. Die Induktivität der kleineren Drossel kann verglichen mit der Induktivität der größeren Drossel, sehr klein gehalten werden, da sie nur für die induktive Spannungsteilung im weniger bevorzugten Betrieb des erfindungsgemäßen Wandlers verwendet wird. In diesem weniger bevorzugten Betrieb muss die kleinere Drossel die Spannung an der Freilaufdiode in dem ersten Leitungspfad nur soviel höher ausfallen lassen als die Spannung an dem Schaltelement mit der Bodydiode in dem zweiten Leitungspfad, dass allein die Freilaufdiode in dem ersten Leitungspfad leitend wird. Hierfür reicht eine Induktivität der kleineren Drossel von weniger als einem Zehntel, meist auch von nicht mehr als einem Hundertstel der Induktivität der größeren Drossel aus.

Dass das Schaltelement in dem ersten Leitungspfad keine Bodydiode aufweist, schließt nicht aus, dass ihm eine Schutzdiode parallel geschaltet sein kann. Diese Schutzdiode weist dieselbe Durchlassrichtung zwischen dem ersten und zweiten Anschluss auf wie die Freilaufdiode in dem ersten Leitungspfad. Die Schutzdiode wird so ausgelegt, dass sie erst bei einer höheren Spannung leitend wird als die Freilaufdiode in dem zweiten Leitungspfad, und/oder so, dass sie auch durch einen größeren durch sie fließenden Strom nicht beschädigt wird. Kostengünstiger ist eine nur kleine Schutzdiode mit eindeutig höherer Durchlassspannung als sie die Schutzdiode in dem zweiten Leitungspfad aufweist.

Es versteht sich, dass bei dem erfindungsgemäßen bidirektionalen Wandler Glättungskapazitäten zwischen den ersten und den zweiten Anschluss und/oder zwischen den dritten und den vierten Anschluss geschaltet sein können.

Bei dem erfindungsgemäßen Wandler kann neben der bislang beschriebenen einen Halbbrücke eine weitere Halbbrücke vorgesehen sein, wobei die beiden Halbbrücken bis auf die Durchlassrichtungen ihrer Dioden und die Sperrrichtungen ihrer Schaltelemente spiegelsymmetrisch zu einer gemeinsamen Verbindung des gemeinsamen zweiten Anschlusses und des gemeinsamen vierten Anschlusses der beiden Halbbrücken ausgebildet und angeordnet sind. Es versteht sich, dass die spiegelsymmetrische Ausbildung der beiden Halbbrücken nicht die Polarität der Anschlüsse und daher weder die Durchlassrichtungen ihrer Dioden noch die Sperrrichtungen ihrer Schaltelemente betrifft. Für jede der beiden Halbbrücken weist dieser erfindungsgemäße Wandler eigene erste und dritte Anschlüsse auf, wobei der erste und der dritte Anschluss der einen Halbbrücke und der erste und der dritte Anschluss der anderen Halbbrücke umgekehrte Polaritäten aufweisen.

Die Spannungen den ersten und zweiten Anschlüssen, zwischen die die beide Halbbrücken geschaltet sind, können dann insbesondere Teilspannungen eines geteilten Zwischenkreises sein. Ebenso können die Spannungen zwischen den dritten und vierten Anschlüssen der Halbbrücken Teilspannungen eines weiteren geteilten Zwischenkreises sein. Die Mittelpunkte der beiden geteilten Zwischenkreise sind dabei die direkt miteinander verbundenen gemeinsamen zweiten und vierten Anschlüsse.

Ein erfindungsgemäßer blindleistungsfähiger Wechselrichter mit einem erfindungsgemäßen bidirektionalen Wandler kann einen an den dritten und vierten Anschluss angeschlossenen Polwender aufweisen, an dessen andere Seite ein Wechselstromnetz anschließbar ist. Dabei ist die bevorzugte Richtung des Leistungsflusses von dem ersten und zweiten Anschluss zu dem dritten und vierten Anschluss, d. h. der Wandler arbeitet primär als Tiefsetzsteller. Seine Hochsetzstellerfunktion ist beschränkt auf die Bereitstellung von Rückspeiseleistung, in den Zeiträumen, in denen Strom und Spannung bei der Bereitstellung von Blindleistung unterschiedliche Vorzeichen aufweisen.

Es versteht sich, dass dann, wenn zwei spiegelsymmetrisch zueinander ausgebildete und angeordnete Halbbrücken vorgesehen sind, der Polwender an die beiden dritten Anschlüsse der beiden Halbbrücken angeschlossen wird.

Der als Tiefsetzsteller betriebene Wandler formt Stromhalbwellen, die von dem Polwender mit wechselnder Richtung den Wechselstromanschlüssen zugeleitet wird.

Die Schalter des Polwenders werden nur netzfrequent getaktet und können daher ohne signifikante Einbußen durch Schaltverluste als kostengünstige IGBT ausgebildet werden.

Da für Wechselrichter üblicherweise keine volle Rückspeisefähigkeit gefordert wird, sondern z. B. nur ein Betrieb mit cos ϕ > 0,8, fließt während der Zeiträume mit unterschiedlichen Vorzeichen von Strom und Spannung regelmäßig nicht der maximale Netzstrom. Damit ist es grundsätzlich möglich, das Schaltelement in dem ersten Leitungspfad langsamer zu takten als das Schaltelement in dem zweiten Leitungspfad und damit einen höheren Rippelstrom zuzulassen, ohne eine magnetische Sättigung der größeren Drossel zu riskieren. So können die höheren Schaltverluste, die mit dem Takten des Schaltelements in dem ersten Leitungspfad verbunden sind, reduziert werden.

Ein erfindungsgemäßer blindleistungsfähiger Wechselrichter mit einem erfindungsgemäßen bidirektionalen Wandler kann auch so ausgebildet sein, dass ein weiterer identisch ausgebildeter Wandler zwischen den ersten und zweiten Anschlüssen einerseits und fünften und sechsten Anschlüssen andererseits angeschlossen ist, wobei die fünften und sechsten Anschlüsse den dritten und vierten Anschlüssen des ersten Wandlers entsprechen. An die dritten und fünften Anschlüsse der beiden Wandler, die über die größeren Drosseln an die Mittelpunkte der zweiten Leitungspfade der beiden Halbbrücken der beiden Wandler angeschlossen sind, ist ein Wechselstromnetz anschließbar. Die vierten und sechsten Anschlüsse der beiden Wandler sind miteinander verbunden. Bei diesem Aufbau des Wechselrichters liefern die beiden Halbbrücken wechselweise jeweils eine Halbwelle des Wechselstroms, während die andere Halbbrücke durchgeschaltet ist, um den dritten Anschluss direkt mit dem vierten Anschluss bzw. den fünften Anschluss direkt mit dem sechsten Anschluss zu verbinden. Für diese direkte Verbindung kann auch zwischen den dem dritten und dem vierten Anschluss des ersten Wandlers und dem fünften und sechsten Anschluss des weiteren Wandlers jeweils ein Überbrückungsschalter vorgesehen sein, der die Halbbrücke des jeweiligen Wandlers halbwellenweise überbrückt. Die Überbrückungsschalter sind vorzugsweise einfache und kostengünstige IGBT.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der relativen Anordnung und Wirkverbindung mehrerer Bauteile - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen erfindungsgemäßen bidirektionalen Wandler mit bevorzugter Richtung des Energieflusses von einem Zwischenkreis niedrigerer Spannung zu einem Zwischenkreis höherer Spannung.
- **Fig. 2**: zeigt separat die Teile des Wandlers gemäß Fig. 1, die bei seinem bevorzugten Betrieb als Hochsetzsteller wirksam sind.
- **Fig. 3**: zeigt die Teile des Wandlers gemäß Fig. 1, die bei seinem weniger bevorzugten Betrieb als Tiefsetzsteller wirksam sind.
- **Fig. 4**: zeigt einen erfindungsgemäßen Wandler, bei dem die bevorzugte Richtung des Energieflusses von einem Zwischenkreis höherer Spannung zu einem Zwischenkreis niedrigerer Spannung verläuft.
- **Fig. 5**: zeigt einen erfindungsgemäßen bidirektionalen Wechselrichter mit einem Wandler gemäß Fig. 4 und einem ausgangsseitigen Polwender.
- **Fig. 6**: zeigt einen erfindungsgemäßen bidirektionalen Wechselrichter mit einem Wandler, der zwei Fig.4 entsprechende Teilschaltungen in spiegelsymmetrischer Anordnung aufweist und einem ausgangsseitigen Polwender; und
- **Fig. 7**: zeigt einen erfindungsgemäßen blindleistungsfähigen Wechselrichter mit zwei halbwellenweise betriebenen erfindungsgemäßen bidirektionalen Wandlern, die wieder im Wesentlichen Fig. 4 entsprechen.

### FIGURENBESCHREIBUNG

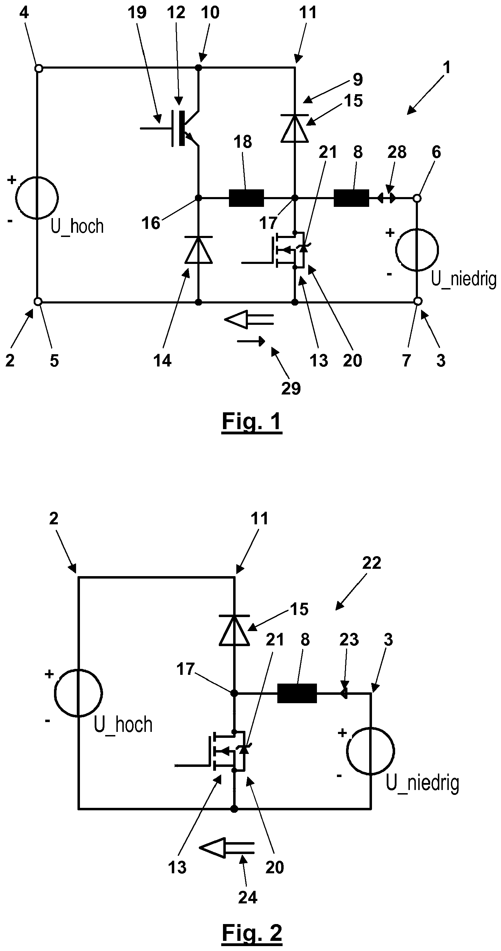

Der in **Fig. 1** gezeigte Wandler 1 ist zwischen einen Gleichspannungszwischenkreis 2 höherer Spannung U_hoch und einen Gleichspannungszwischenkreis 3 niedrigerer Spannung U_niedrig geschaltet. Dabei ist der Wandler 1 über einen ersten Anschluss 4 und einen zweiten Anschluss 5 an den Gleichspannungszwischenkreis 2 angeschlossen und über einen dritten Anschluss 6 und einen vierten Anschluss 7 an den Gleichspannungszwischenkreis 3. Der vierte Anschluss 7 ist direkt mit dem zweiten Anschluss 5 verbunden. Der dritte Anschluss 6 ist über eine größere Drossel 8 an eine Halbbrücke 9 angeschlossen. Die Halbbrücke 9 weist zwei parallele Leitungspfade 10 und 11 auf, die jeweils zwischen den Anschlüssen 4 und 5 verlaufen und in denen jeweils ein Schaltelement 12 bzw. 13 mit einer Freilaufdiode 14 bzw. 15 in Reihe geschaltet ist. Die Mittelpunkte 16 bzw. 17 der beiden Leitungspfade 10 bzw. 11 zwischen den jeweiligen Schaltelementen 12 bzw. 13 und den jeweiligen Freilaufdioden 14 bzw. 15 sind durch eine kleinere Drossel 18 miteinander verbunden, deren Induktivität nur ein Bruchteil der Induktivität der größeren Drossel beträgt, d. h. weniger als 1/10, oft auch nicht mehr als 1/100. Der Mittelpunkt 17 des Leitungspfads 11 ist an die größere Drossel 8 angeschlossen. Das heißt, der Anschluss 6 ist über die größere Drossel 8 mit dem Mittelpunkt 17 und über beide Drosseln 8 und 18 mit dem Mittelpunkt 16 verbunden. Die Schaltelemente 12 und 13 sowie die Freilaufdioden 14 und 15 in den Leitungspfaden 10 und 11 der Halbbrücke 9 sind diagonal angeordnet. Das heißt, das Schaltelement 12 in dem Leitungspfad 10 ist an den Anschluss 4 angeschlossen, während das Schaltelement 13 in dem Leitungspfad 11 an den Anschluss 5 angeschlossen ist. Umgekehrt verhält es sich mit den Freilaufdioden 14 und 15. Bei dem Schaltelement 12 in dem Leitungspfad 10 handelt es sich um einen IGBT 19. Das Schaltelement 13 in dem Leitungspfad 11 ist ein MOSFET 20 mit einer Bodydiode 21. Die Durchlassrichtung der Bodydiode 21 verläuft parallel zu der Durchlassrichtung der Freilaufdiode 14 in dem Leitungspfad 10.

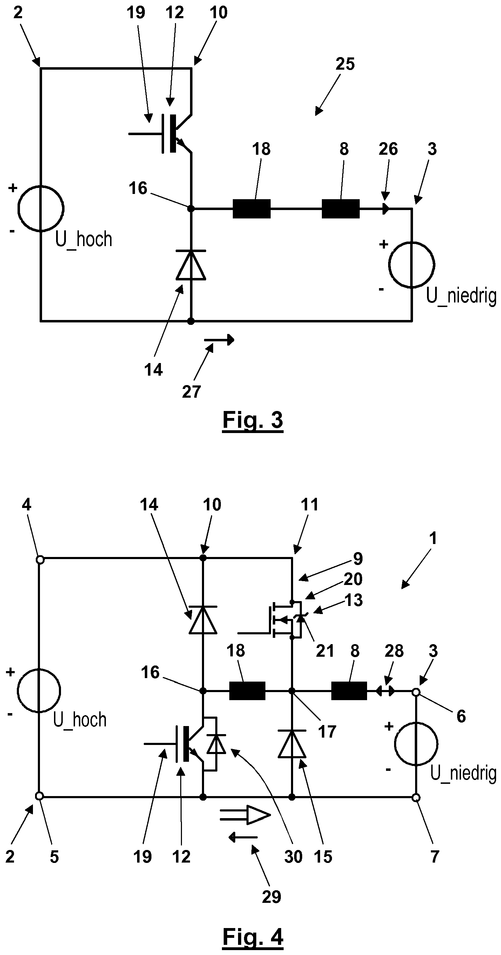

Der Aufbau des Wandlers 1 gemäß Fig. 1 umfasst den in **Fig. 2** dargestellten Hochsetzstellers 22, der das Schaltelement 13 in Form des MOSFET 20 und die Freilaufdiode 15 des Leitungspfads 11 sowie die größere Drossel 8 umfasst. Im Betrieb des Hochsetzstellers durch Takten des Schaltelements 13 ergibt sich ein Stromfluss 23 und entsprechend ein Energiefluss 24 in Richtung von dem Gleichspannungszwischenkreis 3 niedrigerer Spannung U_niedrig zu dem Gleichspannungszwischenkreis 2 höherer Spannung U_hoch. Kombiniert ist der Hochsetzsteller 22 gemäß Fig. 2 bei dem Wandler 1 gemäß Fig. 1 mit einem Tiefsetzsteller 25 gemäß **Fig. 3**, der das Schaltelement 12 in Form des IGBT 19 und die Freilaufdiode 14 des Leitungspfads 10 sowie die Reihenschaltung der kleineren Drossel 18 mit der größeren Drossel 8 umfasst. Bei dem Betrieb des Tiefsetzstellers 25 durch Takten des Schaltelements 12 ergeben sich ein Stromfluss 26 und ein Energiefluss 27 zwischen den Gleichspannungszwischenkreisen 2 und 3, deren Richtungen denen des Stromflusses 23 und des Energieflusses 24 bei dem Hochsetzsteller gemäß Fig. 2 entgegengesetzt sind.

Bei dem Wandler 1 gemäß Fig. 1 kann durch selektives hochfrequentes Takten eines der Schaltelemente 12 und 13 die Funktion des Tiefsetzstellers 25 gemäß Fig. 3 oder des Hochsetzstellers 22 gemäß Fig. 2 realisiert werden. Damit sind ein Stromfluss 28 und ein Energiefluss 29 in beiden Richtungen zwischen den Gleichspannungszwischenkreisen 2 und 3 möglich. Allerdings besteht die Gefahr, dass beim Öffnen des Schaltelements 12 beim Betrieb des Wandlers 1 als Tiefsetzsteller der Strom nicht auf die hierfür vorgesehene Freilaufdiode 14 kommutiert, sondern auf die Bodydiode 21 des MOSFET 20, der als Schaltelement 13 für den Betrieb des Wandlers 1 als Hochsetzsteller vorgesehen ist. Dieses unerwünschte Kommutieren des Stroms auf die Bodydiode 21 wird durch die zwischen die Mittelpunkte 16 und 17 der beiden Leitungspfade 10 und 11 geschaltete kleinere Drossel 18 unterbunden, die zusammen mit der größeren Drossel 8 als induktiver Spannungsteiler wirkt. So ist die an der Freilaufdiode 14 anliegende Spannung beim Öffnen des Schaltelements 12 im Betrieb des Wandlers 1 als Tiefsetzsteller signifikant größer als die an der Bodydiode 21 anliegende Spannung. Entsprechend kommutiert der Strom wie gewünscht auf die Freilaufdiode 14. Im Betrieb des Wandlers 1 als Hochsetzsteller durch Takten des Schaltelements 13 hat die kleinere Drossel 18 keine spannungsteilende Funktion. Dies ist aber auch nicht erforderlich, weil der IGBT 19 als Schaltelement 12 keine Bodydiode aufweist, auf die ein Kommutieren des Stroms verhindert werden muss.

Bei dem Wandler 1 gemäß Fig. 1 ist der bevorzugte Betrieb derjenige als Hochsetzsteller. Daher ist das für den Hochsetzstellerbetrieb vorgesehene Schaltelement 13 als gegenüber dem IGBT 19 kostspieligere MOSFET 20 ausgeführt. Ein MOSFET weist beim hochfrequenten Takten im Bereich mehrerer 10 kHz geringere Schaltverluste als ein IGBT auf. Ein hochfrequentes Takten der Schaltelemente 12 und 13 ist Voraussetzung dafür, dass die größere Drossel 8 klein und damit leicht sowie kostengünstig dimensioniert werden kann. Im weniger bevorzugten Betrieb des Wandlers 1 gemäß Fig. 1 als Tiefsetzsteller werden die etwas höheren Schaltverluste des IGBT 19 hingenommen, der dafür kostengünstiger ist als der MOSFET 20. Diese höheren Schaltverluste treten seltener auf als die geringeren Schaltverluste des MOSFET 20.

Bei dem Wandler 1 gemäß **Fig. 4** ist die Reihenfolge der Schaltelemente 12 bzw. 13 und der Freilaufdioden 14 bzw. 15 in den beiden Leitungspfaden 10 und 11 gegenüber Fig. 1 vertauscht. Weiterhin ist aber das Schaltelement 12 in dem Leitungspfad 10, dessen Mittelpunkt 16 über beide Drosseln 18 und 8 mit dem Anschluss 6 verbunden ist, der IGBT 19, während das Schaltelement 13 in dem Leitungspfad 11, dessen Mittelpunkt 17 nur über die größere Drossel 8 mit dem Anschluss 6 verbunden ist, der MOSFET 20 ist. Auf diese Weise ist der Wandler 1 gemäß Fig. 4 für einen bevorzugten Betrieb als Tiefsetzsteller unter Takten des Schaltelements 13 ausgebildet. Sein Betrieb als Hochsetzsteller unter Takten des Schaltelements 12 ist weniger bevorzugt. Im bevorzugten Betrieb beider Wandler 1 gemäß Fig. 1 und 4 wird also immer das Schaltelement 13 in dem Leitungspfad 11 getaktet, während in dem weniger bevorzugten Betrieb das Schaltelement 12 in dem Leitungspfad 10 getaktet wird. In dem bevorzugten Betrieb treten immer geringere Schaltverluste auf als in dem weniger bevorzugten Betrieb. Der Aufbau des Wandlers 1 ist in jedem Fall besonders einfach. Beide Wandler 1 gemäß den Fig. 1 und 2 unterscheiden sich nur durch die Anordnung der Schaltelemente 12 und 13 und der Freilaufdioden 14 und 15 in den beiden Leitungspfaden 10 und 11.

Dass in Fig. 4 eine dem Schaltelement 12 in Form des IGBT 19 parallel geschaltete Schutzdiode 30 vorgesehen ist, ist kein grundsätzliches Unterscheidungsmerkmal eines Wandlers 1 mit bevorzugtem Tiefsetzstellerbetrieb von einem Wandler 1 mit bevorzugtem Hochsetzstellerbetrieb. Vielmehr könnte eine solche Schutzdiode auch bei dem IGBT 19 gemäß Fig. 1 vorgesehen sein. Sie weist in jedem Fall eine größere Durchlassspannung als die ihr parallel geschaltete Freilaufdiode 15 auf.

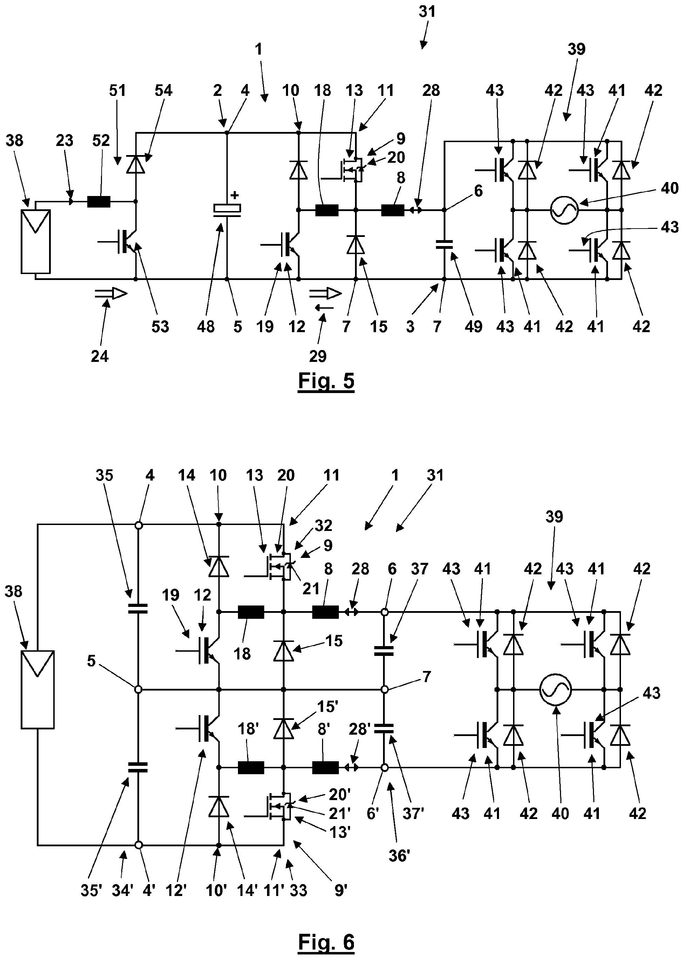

Bei dem in **Fig. 5** dargestellten erfindungsgemäßen blindleistungsfähigen Wechselrichter 31 weist der Wandler 1 bis auf die hier nicht vorhandene Schutzdiode 30 den Aufbau gemäß Fig. 4 auf, der durch Takten des Schaltelements 13 bevorzugt als Tiefsetzsteller betrieben wird, während er durch Takten des Schaltelements 12 auch als Hochsetzsteller betreibbar ist. Im Tiefsetzstellerbetrieb formt er Halbwellen aus dem aus dem Gleichspannungszwischenkreis 2 fließenden Strom. An den Zwischenkreiskondensator 48 des Gleichspannungszwischenkreises 2 ist ein Photovoltaikgenerator 38 über einen Hochsetzsteller 51 angeschlossen. Der Hochsetzsteller 51 weist eine Hochsetzstellerdrossel 52, einen Hochsetzstellerschalter 53 und eine Hochsetzstellerdiode 54 in der typischen Anordnung gemäß Fig. 2 auf. Der Gleichspannungszwischenkreis 3 weist einen kleineren, nur zur Glättung des Schaltrippels bei den Halbwellen des Stroms dienenden Zwischenkreiskondensator 49 auf. Ein dem Gleichspannungszwischenkreis 3 nachgeschalteter Polwender 39 kehrt die Polarität jeder zweiten Halbwelle des Stroms um und speist so einen Wechselstrom in ein angeschlossenes Wechselstromnetz 40 ein. Der Polwender ist in bekannter Weise aus Schaltelementen 41 und Freilaufdioden 42 ausgebildet. Die Schaltelemente 41 sind als IGBT 43 ausgeführt. Durch die Möglichkeit des Betriebs des Wandlers 1 als Hochsetzsteller ist der Wechselrichter 31 gemäß Fig. 5 auch voll blindleistungsfähig, indem er einen Stromfluss von dem Wechselstromnetz 40 zu dem Gleichspannungszwischenkreis 2 ermöglicht.

Bei dem in **Fig. 6** dargestellten erfindungsgemäßen blindleistungsfähigen Wechselrichter 31 weist ein Wandler 1 zwei Teilschaltungen 32 und 33 auf, die jeweils bis auf die hier nicht vorhandene Schutzdiode 30 einem Wandler 1 gemäß Fig. 4 entsprechen. Daher sind die Teile der Teilschaltung 32 hier mit denselben Bezugszeichen wie die Teile des Wandlers in Fig. 4 versehen, während die Teile der Teilschaltung mit den jeweils um eine Strich " ' " ergänzten Bezugszeichen versehen sind. Die beiden Teilschaltungen 32 und 33 sind bis auf die Durchlassrichtungen ihrer Freilaufdioden 14 und 15 bzw. 14' und 15' und die Sperrrichtungen ihrer Schaltelemente 12 und 13 bzw. 12' und 13' spiegelsymmetrisch zu ihren gemeinsamen Anschlüssen 5 und 7 und deren gemeinsamen Verbindung ausgebildet und angeordnet. Jede Teilschaltung 32 und 33 weist also eine eigene Halbbrücke 9 bzw. 9' auf. Die beiden Halbbrücken 9 und 9' sind eingangsseitig an zwei Teile eines geteilten Gleichspannungszwischenkreises 34, d. h. hier an einen von zwei in Reihe geschalteten Kondensatoren 35 und 35' angeschlossen. Ausgangsseitig sind die Teilschaltungen 32 und 33 an zwei Teile eines ausgangsseitigen Gleichspannungszwischenkreises 36 angeschlossen, die hier durch in Reihe geschaltete Kondensatoren 37 und 37' wiedergegeben sind. Die beiden Teilschaltungen 32 und 33 sind zu einem Wandler 1 kombiniert, der durch abgestimmtes Takten der Schaltelemente 13 und 13' bevorzugt als Tiefsetzsteller betrieben wird, während er durch abgestimmtes Takten der Schaltelemente 12 und 12' auch als Hochsetzsteller betreibbar ist. Im Tiefsetzstellerbetrieb formt er Halbwellen aus einem Strom, der von einem Photovoltaikgenerator 38 generiert wird, der hier direkt an den Gleichspannungszwischenkreises 34 angeschlossen ist. Ein dem geteilten Gleichspannungszwischenkreis 36 nachgeschalteter Polwender 39 mit demselben Aufbau und derselben Funktion wie in Fig. 5 kehrt die Polarität jeder zweiten Halbwelle um und speist so einen Wechselstrom in ein angeschlossenes Wechselstromnetz 40 ein Durch die Möglichkeit des Betriebs des Wandlers 1 als Hochsetzsteller ist auch der Wechselrichter 31 gemäß Fig. 6 voll blindleistungsfähig, indem er einen Stromfluss von dem Netz zu dem geteilten Gleichspannungszwischenkreis 34 ermöglicht.

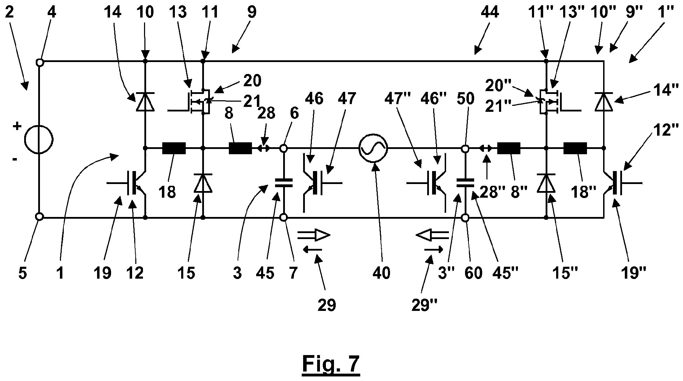

**Fig. 7** illustriert einen weiteren erfindungsgemäßen blindleistungsfähigen Wechselrichter 44. Hier sind zwei Halbbrücken 9 und 9" mit bis auf hier nicht vorhandene Schutzdioden grundsätzlich demselben Aufbau wie in Fig. 4 parallel zueinander an die Anschlüsse 4 und 5 angeschlossen. Die anderen Anschlüsse der einen Halbbrücke 9 sind der dritte Anschluss 6 und der vierte Anschluss 7, während die Anschlüsse der anderen Halbbrücke 9" ein fünfter Anschluss 50 und ein sechster Anschluss 60 sind. Die weiteren Teile der einen Halbbrücke 9 sind hier mit denselben Bezugszeichen wie die Teile des Wandlers 1 in Fig. 4 versehen, während die weiteren Teile der anderen Halbbrücke 9" mit den jeweils um einen Doppelstrich """ ergänzten Bezugszeichen versehen sind. Die einander entsprechenden Anschlüsse 6 und 50 der beiden Halbbrücken 9 sind an das Wechselstromnetz 40 angeschlossen, während ihre Anschlüsse 7 und 60 miteinander verbunden sind. Der Wechselrichter 44 kommt so ohne einen speziellen Polwender aus. Vielmehr werden die Halbbrücken 9 und 9" abwechselnd halbwellenweise als Tiefsetzsteller betrieben, um eine Halbwelle des in das Wechselstromnetz 40 einzuspeisenden Stroms zu formen. Die dabei jeweils inaktive Halbbrücke 9 bzw. 9" wird durchgeschaltet, indem ihr Schaltelement 12 bzw. 12" in Form des IGBT 19 bzw. 19" dauerhaft geschlossen wird. Alternativ kann ein den jeweiligen Gleichspannungszwischenkreis 3 bzw. 3" ausbildender Kondensator 45 bzw. 45" mit einem zusätzlichen Überbrückungsschalter 46 bzw. 46" in Form eines IGBT 47 bzw. 47" überbrückt werden, um ohmsche Verluste beim Stromfluss durch die Drosseln 8 und 18 bzw. 8" und 18" zu vermeiden. Auch der Wechselrichter 44 ist blindleistungsfähig, weil jede seiner Halbbrücken 9 bzw. 9" und der durch sie bereitgestellte Wandler 1 bzw. 1" bidirektional ist, und so auch als Hochsetzsteller betrieben werden kann, um einen Strom aus dem Netz in den Gleichspannungszwischenkreis 2 höherer Spannung fließen zu lassen.

### BEZUGSZEICHENLISTE

- 1: Wandler
- 2: Gleichspannungszwischenkreis
- 3: Gleichspannungszwischenkreis
- 4: Anschluss
- 5: Anschluss
- 6: Anschluss
- 7: Anschluss
- 8: größere Drossel
- 9: Halbbrücke
- 10: Leitungspfad
- 11: Leitungspfad
- 12: Schaltelement
- 13: Schaltelement
- 14: Freilaufdiode
- 15: Freilaufdiode
- 16: Mittelpunkt
- 17: Mittelpunkt
- 18: kleinere Drossel
- 19: IGBT
- 20: MOSFET
- 21: Bodydiode
- 22: Hochsetzsteller
- 23: Stromfluss
- 24: Energiefluss
- 25: Tiefsetzsteller
- 26: Stromfluss
- 27: Energiefluss
- 28: Stromfluss
- 29: Energiefluss
- 30: Schutzdiode
- 31: Wechselrichter
- 32: Teilschaltung
- 33: Teilschaltung
- 34: geteilter Gleichspannungszwischenkreis
- 35: Kondensator
- 36: geteilter Gleichspannungszwischenkreis
- 37: Kondensator
- 38: Photovoltaikgenerator
- 39: Polwender
- 40: Wechselstromnetz
- 41: Schaltelement
- 42: Freilaufdiode
- 43: IGBT
- 44: Wechselrichter
- 45: Kondensator
- 46: Überbrückungsschalter
- 47: IGBT
- 48: Zwischenkreiskondensator
- 49: Zwischenkreiskondensator
- 50: Anschluss
- 51: Hochsetzsteller
- 52: Hochsetzstellerdrossel
- 53: Hochsetzstellerschalter
- 54: Hochsetzstellerdiode
- 60: Anschluss
- U_hoch: Spannung
- U_niedrig: Spannung

## Patentansprüche

1. Bidirektionaler Wandler (1) mit
- einem ersten Anschluss (4), einem zweiten Anschluss (5), einem dritten Anschluss (6) und einem vierten Anschluss (7),
- wobei der erste und der zweite Anschluss ein Paar von hochspannungsseitigen Anschlüssen (4, 5) ausbildet, zwischen denen im Betrieb des Wandlers eine erste Spannung (U_hoch) anliegt, und
- wobei der dritte und der vierte Anschluss ein Paar von niederspannungsseitigen Anschlüssen (6, 7) ausbildet, zwischen denen im Betrieb des Wandlers (1) eine zweite Spannung (U_niedrig) anliegt, wobei die erste Spannung (U_hoch) mindestens so groß ist wie die zweite Spannung (U_niedrig), und
- einer Halbbrücke (9), die zwei Schaltelemente (12, 13) und zwei Freilaufdioden (14, 15) umfasst,
- wobei die Halbbrücke (9) in einen ersten Leitungspfad (10) und einen zweiten Leitungspfad (11) aufgeteilt ist, die parallel zwischen den ersten Anschluss (4) und den zweiten Anschluss (5) geschaltet sind, in denen jeweils eines der Schaltelemente (12 bzw. 13) und eine der Freilaufdioden (14 bzw. 15) in Reihe geschaltet sind und deren Mittelpunkte (16 bzw. 17) über eine kleinere Drossel (18) miteinander verbunden sind,
- wobei die beiden Schaltelemente (12, 13) und die beiden Freilaufdioden (14, 15) in den beiden Leitungspfaden (10, 11) jeweils mit unterschiedlichen Anschlüssen (4 oder 5) des Paars von hochspannungsseitigen Anschlüssen (4, 5) verbunden sind,
- wobei die Halbbrücke (9) einen ersten Betriebsmodus aufweist und dazu ausgebildet ist, in dem ersten Betriebsmodus, in dem das Schaltelement (12) in dem ersten Leitungspfad mit hoher Frequenz getaktet wird, einen Energiefluss (29) in einer ersten Richtung zwischen dem Paar von hochspannungsseitigen Anschlüssen (4, 5) und dem Paar von niederspannungsseitigen Anschlüssen (6, 7) hervorzurufen,
- wobei die Halbbrücke (9) einen zweiten Betriebsmodus aufweist und dazu ausgebildet ist, in dem zweiten Betriebsmodus, in dem sie das Schaltelement (13) in dem zweiten Leitungspfad mit hoher Frequenz getaktet wird, einen Energiefluss (29) in einer der ersten Richtung entgegengesetzten zweiten Richtung zwischen dem Paar von hochspannungsseitigen Anschlüssen (4, 5) und dem Paar von niederspannungsseitigen Anschlüssen (6, 7) hervorzurufen, und
- wobei das Schaltelement (13) in dem zweiten Leitungspfad (11) eine Bodydiode (21) aufweist, und
- einer größeren Drossel (8), die zwischen den Mittelpunkt (17) des zweiten Leitungspfads (11) und den dritten Anschluss (6) geschaltet ist,
- wobei eine Induktivität der kleineren Drossel (18) weniger als ein Zehntel einer Induktivität der größeren Drossel (8) beträgt,
- wobei zwischen den Mittelpunkt (16) des ersten Leitungspfads (10) und den dritten Anschluss (6) die kleinere Drossel (18) und die größere Drossel (8) in Reihe geschaltet sind, während zwischen den Mittelpunkt (17) des zweiten Leitungspfads (11) und den dritten Anschluss (6) nur die größere Drossel (8) geschaltet ist, und
- wobei die beiden Schaltelemente (12, 13) von unterschiedlichem Typ sind, wobei das Schaltelement (12) in dem ersten Leitungspfad (10) keine Bodydiode (21) aufweist und höhere Schaltverluste verursacht als das Schaltelement (13) in dem zweiten Leitungspfad (11) und wobei die zweite Richtung eine bevorzugte Richtung des Energieflusses (29) zwischen dem Paar von hochspannungsseitigen Anschlüssen (4, 5) und dem Paar von niederspannungsseitigen Anschlüssen (6, 7) ist.

2. Wandler (1) nach Anspruch 1, wobei das Schaltelement (12) in dem ersten Leitungspfad (10) ein IGBT (19) ist und das Schaltelement (13) in dem zweiten Leitungspfad (11) ein FET (20) ist.

3. Wandler (1) nach Anspruch 1 oder 2, wobei die bevorzugte Richtung des Energieflusses (29) von dem Paar von hochspannungsseitigen Anschlüssen (4, 5) zu dem Paar von niederspannungsseitigen Anschlüssen (6, 7) verläuft.

4. Wandler (1) nach Anspruch 3, wobei das Schaltelement (13) in dem zweiten Leitungspfad (11) zwischen den Mittelpunkt (17) des zweiten Leitungspfads (11) und den ersten Anschluss (4) geschaltet ist.

5. Wandler (1) nach einem der Ansprüche 1 bis 4, wobei dem Schaltelement (12) in dem ersten Leitungspfad (10) eine Schutzdiode (30) parallel geschaltet ist, die dieselbe Durchlassrichtung zwischen dem ersten Anschluss (4) und dem zweiten Anschluss (5) aufweist, wie die Freilaufdiode (14) in dem ersten Leitungspfad (10).

6. Wandler (1) nach einem der Ansprüche 1 bis 5, wobei zwischen den ersten Anschluss (4) und den zweiten Anschluss (5) und/oder den dritten Anschluss (6) und den vierten Anschluss (7) eine Glättungskapazität geschaltet ist.

7. Wandler (1) nach einem der Ansprüche 1 bis 6, wobei eine weitere Halbbrücke (9') vorgesehen ist, dass die beiden Halbbrücken (9, 9') bis auf die Durchlassrichtungen ihrer Dioden (14, 14'; 15, 15'; 21, 21'; 30, 30') und die Sperrrichtungen ihrer Schaltelemente (12, 12; 13, 13') spiegelsymmetrisch zu einer gemeinsamen Verbindung des gemeinsamen zweiten Anschlusses (5) und des gemeinsamen vierten Anschlusses (7) der beiden Halbbrücken (9, 9') ausgebildet und angeordnet sind.

8. Wechselrichter (31) mit einem Wandler (1) nach einem der Ansprüche 3 und 4 oder einem der Ansprüche 5 und 6 soweit rückbezogen auf einen der Ansprüche 3 und 4, wobei an den dritten Anschluss (6) und den vierten Anschluss (7) ein Polwender (39) angeschlossen ist, an dessen andere Seite ein Wechselstromnetz (40) anschließbar ist.

9. Wechselrichter (31) mit einem Wandler (1) nach Anspruch 7 soweit rückbezogen auf einen der Ansprüche 3 und 4, wobei an die dritten Anschlüsse (6, 6') der beiden Halbbrücken (9, 9') ein Polwender (39) angeschlossen ist, an dessen andere Seite ein Wechselstromnetz (40) anschließbar ist.

10. Wechselrichter (31) nach Anspruch 8 oder 9, wobei der Polwender (39) IGBT (43) als Schaltelemente (41) aufweist.

11. Wechselrichter (44) mit einem Wandler (1) nach einem der Ansprüche 3 und 4 oder einem der Ansprüche 5 und 6 soweit rückbezogen auf einen der Ansprüche 3 und 4, wobei ein weiterer identisch ausgebildeter Wandler (1) zwischen dem ersten Anschluss (4) und dem zweiten Anschluss (5) einerseits sowie einem fünften Anschluss (50) und einem sechsten Anschluss (60) vorgesehen ist, wobei an den dritten Anschluss (6) und den fünften Anschluss (50), die über die größeren Drosseln (8, 8") an die Mittelpunkte (17, 17") der zweiten Leitungspfade (11, 11") der beiden Halbbrücken (9, 9") der beiden Wandler (1) angeschlossen sind, ein Wechselstromnetz (40) anschließbar ist und wobei der vierte Anschluss (7) und der sechste Anschluss (60) miteinander verbunden sind.

12. Wechselrichter (44) nach Anspruch 11, wobei zwischen dem dritten Anschluss (6) und dem vierten Anschluss (7) sowie dem fünften Anschluss (50) und dem sechsten Anschluss (60) jeweils ein Überbrückungsschalter (46, 46") vorgesehen ist.

13. Wechselrichter (44) nach Anspruch 12, wobei die Überbrückungsschalter (46) IGBT (47) sind.

## Claims

1. Bidirectional converter (1) having
- a first connection (4), a second connection (5), a third connection (6) and a fourth connection (7),
- wherein the first and the second connection form a pair of high voltage-side connections (4, 5) between which a first voltage (U_high) is present during operation of the converter, and
- wherein the third and the fourth connection form a pair of low voltage-side connections (6, 7) between which a second voltage (U_low) is present during operation of the converter (1), wherein the first voltage (U_high) is at least as high as the second voltage (U_low), and
- a half-bridge (9) comprising two switch elements (12, 13) and two freewheeling diodes (14, 15),
- wherein the half-bridge (9) is divided into a first conduction path (10) and a second conduction path (11) connected in parallel between the first connection (4) and the second connection (5), wherein in each conduction path one of the switch elements (12 or 13) and one of the freewheeling diodes (14 or 15) are connected in series and the center points (16 or 17) of the conduction paths are connected to one another via a smaller inductor (18),
- wherein the two switch elements (12, 13) and the two freewheeling diodes (14, 15) in the two conduction paths (10, 11) are in each case connected to different connections (4 or 5) of the pair of high voltage-side connections (4, 5),
- wherein the half-bridge (9) has a first operating mode and is configured, in the first operating mode in which the switch element (12) in the first conduction path is clocked at a high frequency to cause a flow of energy (29) in a first direction between the pair of high voltage-side connections (4, 5) and the pair of low voltage-side connections (6, 7),
- wherein the half-bridge (9) has a second operating mode and is configured, in the second operating mode in which the switch element (13) in the second conduction path is clocked at a high frequency to cause a flow of energy (29) in a second direction which is opposite to the first direction between the pair of high voltage-side connections (4, 5) and the pair of low voltage-side connections (6, 7), and
- wherein the switch element (13) in the second conduction path (11) comprises a body diode (21), and
- a larger inductor (8) connected between the center point (17) of the second conduction path (11) and the third connection (6),
- wherein an inductance of the smaller inductor (18) is less than a tenth of an inductance of the larger inductor (8),
- wherein the smaller inductor (18) and the larger inductor (8) are connected in series between the centre point (16) of the first conduction path (10) and the third connection (6), while only the larger inductor (8) is connected between the center point (17) of the second conduction path (11) and the third connection (6), and
- wherein the two switch elements (12, 13) are of different types, wherein the switch element (12) in the first conduction path (10) does not have a body diode (21) and causes higher switching losses than the switch element (13) in the second conduction path (11) and wherein the second direction is a preferred direction of the flow of energy (29) between the pair of high voltage-side connections (4, 5) and the pair of low voltage-side connections (6, 7).

2. Converter (1) according to Claim 1, wherein the switch element (12) in the first conduction path (10) is an IGBT (19) and the switch element (13) in the second conduction path (11) is a FET (20).

3. Converter (1) according to Claim 1 or 2, wherein the preferred direction of the flow of energy (29) runs from the pair of high voltage-side connections (4, 5) to the pair of low voltage-side connections (6, 7).

4. Converter (1) according to Claim 3, wherein the switch element (13) in the second conduction path (11) is connected between the center point (17) of the second conduction path (11) and the first connection (4).

5. Converter (1) according to any of Claims 1 to 4, wherein the switch element (12) in the first conduction path (10) has a protective diode (30) connected in parallel therewith, which protective diode has the same forward direction between the first connection (4) and the second connection (5) as the freewheeling diode (14) in the first conduction path (10).

6. Converter (1) according to any of Claims 1 to 5, wherein a smoothing capacitor is connected between the first connection (4) and the second connection (5) and/or the third connection (6) and the fourth connection (7).

7. Converter (1) according to any of Claims 1 to 6, wherein a further half-bridge (9') is provided, so that the two half-bridges (9, 9') are designed and arranged so as to be mirror-symmetrical except for the forward directions of their diodes (14, 14'; 15, 15'; 21, 21'; 30, 30') and the blocking directions of their switch elements (12, 12; 13, 13') about a common connection of the common second connection (5) and the common fourth connection (7) of the two half-bridges (9, 9').

8. Inverter (31) having a converter (1) according to either of Claims 3 and 4 or either of Claims 5 and 6, provided they refer back to either of Claims 3 and 4, wherein a commutator (39) is connected to the third connection (6) and the fourth connection (7), to the other side of which commutator an alternating-current system (40) can be connected.

9. Inverter (31) having a converter (1) according to Claim 7, provided it refers back to either of Claims 3 and 4, wherein a commutator (39) is connected to the third connections (6, 6') of the two half-bridges (9, 9'), to the other side of which commutator an alternating-current system (40) can be connected.

10. Inverter (31) according to Claim 8 or 9, wherein the commutator (39) comprises IGBTs (43) as switch elements (41).

11. Inverter (44) comprising a converter (1) according to any one of Claims 3 and 4, or any one of Claims 5 and 6, provided they refer back to any one of Claims 3 and 4, wherein a further, identically designed, converter (1) is provided between the first connection (4) and the second connection (5) on one side, and a fifth connection (50) and a sixth connection (60), wherein an alternating-current system (40) is connectable to the third connection (6) and the fifth connection (50), which are connected via the larger inductors (8, 8") to the center points (17, 17") of the second conduction paths (11, 11") of the two half-bridges (9, 9") of the two converters (1), and wherein the fourth connection (7) and the sixth connection (60) are connected to one another.

12. Inverter (44) according to Claim 11, wherein in each case a bypass switch (46, 46") is provided between the third connection (6) and the fourth connection (7), and the fifth connection (50) and the sixth connection (60).

13. Inverter (44) according to Claim 12, wherein the bypass switches (46) are IGBTs (47).

## Revendications

1. Convertisseur bidirectionnel (1) comprenant
- une première borne (4), une deuxième borne (5), une troisième borne (6) et une quatrième borne (7),
- les première et deuxième bornes formant une paire de bornes côté haute tension (4, 5) entre lesquelles une première tension (U_élevée) est appliquée pendant le fonctionnement du convertisseur, et
- les troisième et quatrième bornes formant une paire de bornes côté basse tension (6, 7) entre lesquelles une deuxième tension (U_basse) est appliquée pendant le fonctionnement du convertisseur (1), la première tension (U_élevée) étant au moins égale à la deuxième tension (U_basse), et
- un demi-pont (9) qui comprend deux éléments de commutation (12, 13) et deux diodes à roue libre (14, 15),
- le demi-pont (9) étant divisé en un premier chemin de conduction (10) et un deuxième chemin de conduction (11) qui sont montés en parallèle entre la première borne (4) et la deuxième borne (5) dans chacun desquels un des éléments de commutation (12 ou 13) et une des diodes à roue libre (14 ou 15) sont montés en série et dont les points médians (16 ou 17) sont reliés entre eux par une petite bobine de choc (18),
- les deux éléments de commutation (12, 13) et les deux diodes à roue libre (14, 15) situés dans les deux chemins de conduction (10, 11) étant reliés chacun à des bornes différentes (4 ou 5) de la paire de bornes côté haute tension (4, 5),
- le demi-pont (9) comportant un premier mode de fonctionnement et étant conçu pour provoquer, dans le premier mode de fonctionnement dans lequel l'élément de commutation (12) situé dans le premier chemin de conduction est cadencé à haute fréquence, un flux d'énergie (29) dans un premier sens entre la paire de bornes côté haute tension (4, 5) et la paire de bornes côté basse tension (6, 7),
- le demi-pont (9) comportant un deuxième mode de fonctionnement et étant conçu pour provoquer, dans le deuxième mode de fonctionnement dans lequel l'élément de commutation (13) situé dans le deuxième chemin de conduction est cadencé à haute fréquence, un flux d'énergie (29) dans un deuxième sens opposé au premier sens entre la paire de bornes côté haute tension (4, 5) et la paire de bornes côté basse tension (6, 7), et
- l'élément de commutation (13) situé dans le deuxième chemin de conduction (11) étant une diode de substrat (21), et
- une grande bobine de choc (8) qui est montée entre le point médian (17) du deuxième chemin de conduction (11) et la troisième borne (6),
- l'inductance de la petite bobine de choc (18) étant inférieure à un dixième de l'inductance de la grande bobine de choc (8),
- la petite bobine de choc (18) et la grande bobine de choc (8) étant montées en série entre le point médian (16) du premier chemin de conduction (10) et la troisième borne (6), tandis que seule la petite bobine de choc (8) est montée entre le point médian (17) du deuxième chemin de conduction (11) et la troisième borne (6), et
- les deux éléments de commutation (12, 13) étant de types différents, l'élément de commutation (12) situé dans le premier chemin de conduction (10) ne comportant pas de diode de substrat (21) et générant des pertes de commutation plus élevées que l'élément de commutation (13) situé dans le deuxième chemin de conduction (11) et le deuxième sens étant un sens préféré du flux d'énergie (29) entre la paire de bornes côté haute tension (4, 5) et la paire de bornes côté basse tension (6, 7).

2. Convertisseur (1) selon la revendication 1, l'élément de commutation (12) situé dans le premier chemin de conduction (10) étant un IGBT (19) et l'élément de commutation (13) situé dans le deuxième chemin de conduction (11) étant un FET (20).

3. Convertisseur (1) selon la revendication 1 ou 2, le sens du flux d'énergie (29) préféré allant de la paire de bornes côté haute tension (4, 5) à la paire de bornes côté basse tension (6, 7).

4. Convertisseur (1) selon la revendication 3, l'élément de commutation (13) situé dans le deuxième chemin de conduction (11) étant monté entre le point médian (17) du deuxième chemin de conduction (11) et la première borne (4).

5. Convertisseur (1) selon l'une des revendications 1 à 4, une diode de protection (30) étant montée en parallèle avec l'élément de commutation (12) situé dans le premier chemin de conduction (10), laquelle diode de protection a le même sens passant entre la première borne (4) et la deuxième borne (5) que la diode de roue libre (14) située dans le premier chemin de conduction (10) .

6. Convertisseur (1) selon l'une des revendications 1 à 5, une capacité de lissage étant montée entre la première borne (4) et la deuxième borne (5) et/ou entre la troisième borne (6) et la quatrième borne (7).

7. Convertisseur (1) selon l'une des revendications 1 à 6, un autre demi-pont (9') étant prévu, les deux demi-ponts (9, 9') étant conçus et disposés à symétrie spéculaire par rapport à une liaison commune de la deuxième borne commune (5) et de la quatrième borne commune (7) des deux demi-ponts (9, 9') à l'exception des sens passants de leurs diodes (14, 14' ; 15, 15' ; 21, 21' ; 30, 30') et des sens bloquants de leurs éléments de commutation (12, 12 ; 13, 13').

8. Onduleur (31) équipé d'un convertisseur (1) selon l'une des revendications 3 et 4 ou l'une des revendications 5 et 6, dans la mesure où elle se rapporte à l'une des revendications 3 et 4, un inverseur de polarité (39) étant raccordé à la troisième borne (6) et à la quatrième borne (7), un réseau électrique alternatif (40) pouvant être raccordé à son autre côté.

9. Onduleur (31) équipé d'un convertisseur (1) selon la revendication 7 dans la mesure où elle se rapporte à l'une des revendications 3 et 4, un inverseur de polarité (39) étant raccordé aux troisièmes bornes (6, 6') des deux demi-ponts (9, 9'), un réseau à courant alternatif (40) pouvant être raccordé à son autre côté.

10. Onduleur (31) selon la revendication 8 ou 9, l'inverseur de polarité (39) comportant des IGBT (43) comme éléments de commutation (41).

11. Onduleur (44) équipé d'un convertisseur (1) selon l'une des revendications 3 et 4, ou l'une des revendications 5 et 6, dans la mesure où elle se rapporte à l'une des revendications 3 et 4, un autre convertisseur (1) de construction identique étant prévu entre la première borne (4) et la deuxième borne (5) d'une part et entre une cinquième borne (50) et une sixième borne (60), un réseau électrique alternatif (40) pouvant être raccordé à la troisième borne (6) et à la cinquième borne (50) qui sont raccordées aux points médians (17, 17") des deuxièmes chemins de conduction (11, 11") des deux demi-ponts (9, 9") des deux convertisseurs (1) par le biais les grandes bobines de choc (8, 8"), et la quatrième borne (7) et la sixième borne (60) étant reliées entre elles.

12. Onduleur (44) selon la revendication 11, un commutateur de pontage (46, 46") étant prévu entre la troisième borne (6) et la quatrième borne (7) et entre la cinquième borne (50) et la sixième borne (60).

13. Onduleur (44) selon la revendication 12, les commutateurs de pontage (46) étant des IGBT (47).
